# EUROPÄISCHE PATENTSCHRIFT

(11) **EP 3 061 974 B1**
(45) Veröffentlichungstag und Bekanntmachung des Hinweises auf die Patenterteilung: **30.01.2019**
(21) Anmeldenummer: 16156671.6
(22) Anmeldetag: 22.02.2016
(51) Int. Cl.: F04D 9/04, F04D 29/12, F04D 29/58, B01D 19/00, F04D 7/06, F16J 15/34

(54) **KÜHL- UND ENTGASUNGSSYSTEM FÜR EINE WÄRMETRÄGERPUMPE**
COOLING AND DEGASSING SYSTEM FOR A HEAT TRANSFER PUMP
SYSTÈME DE REFROIDISSEMENT ET DE DÉGAZAGE POUR UNE POMPE DE TRANSFERT DE CHALEUR

(30) Priorität: 24.02.2015 DE 102015002397
(43) Veröffentlichungstag der Anmeldung: 31.08.2016
(73) Patentinhaber: Dickow Pumpen GmbH & Co. KG., 84478 Waldkraiburg (DE)
(72) Erfinder: RUSS, Andreas, 84478 Waldkraiburg (DE)
(74) Vertreter: Fischer & Konnerth

(56) Entgegenhaltungen:
- CA-A1- 2 338 473
- DE-A1- 2 140 959
- DE-B- 1 077 013
- US-A- 3 574 473

## Beschreibung

Die vorliegende Erfindung betrifft ein Kühl- und Entgasungssystem für eine Wärmeträgerpumpe.

Derartige Einrichtungen finden insbesondere in Pumpen zur Förderung von Heizmedien, z. B. Wärmeträgerölen oder Heißwasser Verwendung. Im Folgenden soll funktionsmäßig mit dem Begriff Wärmeträgerpumpe jeweils auch der Begriff Heißwasserpumpe gemeint sein.

Aus der US3574473 A ist ein Kühl- und Entgasungssystem für eine Wärmeträgerpumpe gemäß dem Oberbegriff des Anspruchs 1 bekannt.

Die DE 21 40 959 A1 lehrt eine Einrichtung zum Spülen der Wellenabdichtung an einer Kreiselpumpe, mit einem Kühler und einer Turbine zur Erzeugung eines Zirkulationsstroms und Förderung eines Wärmeträgers durch einen Dichtungsraum der Pumpe.

Werden beim Einsatz von Heizmedien in Wärmeträgerkreisläufen von Pumpen im Temperaturbereich unter 180 °C Wasser oder Dampf verwendet, so kommen für höhere Temperaturen von 180 °C und mehr (bis zu 450 °C) aufgrund der besseren Wärmeleitzahlen sowie der längeren Standzeiten eher Wärmeträgeröle auf Mineralölbasis oder synthetische Wärmeträgeröle zum Einsatz. Hierbei stellt sich bei hohen Temperaturen das Problem der Abspaltung von sog. gasförmigen Leichtsiedern, welche beim Eindringen in Lagerungen, insbesondere Gleitlagerungen die fehlerfreie Schmierung gefährden und damit im schlimmsten Fall - z. B. Trockenlauf - zur Zerstörung von Lagerkomponenten und damit Maschinentotalausfall führen können. Es gilt also, zu vermeiden, dass während des Betriebs von Pumpen mit Verwendung von Wärmeträgerölen aus diesen ausgasende Leichtsieder oder im Pumpenkreislauf befindlicher Wasserdampf in Lagerbereiche gelangt. Ziel ist es, Leichtsieder und Dampf aus der jeweiligen Maschine vollständig zu entfernen, d. h. die Anlage "zu entlüften".

Neben den hermetisch dichten Pumpen (Spaltrohrmotor oder magnetgekuppelt) verlangt der Markt auch kostengünstige Gleitringdichtungspumpen. Um die Einsatzgrenzen für solche Pumpen zu erweitern werden die Gleitringdichtungen derart gestaltet, dass sie in einem Bereich geringer thermischer Belastungen liegen und nur einen geringen Austausch des Wärmeträgers zwischen Pumpengehäuse und Gleitringdichtungsraum zulassen. Die Trennung erfolgt in der Regel mittels einer langgezogenen Kühlstrecke. Ziel dieser Anordnung ist es, die Temperatur an den Gleitflächen der Gleitdichtungen so niedrig wie möglich zu halten, um eine Verdampfung des Mediums im Dichtungsspalt zu verhindern. Gase im Einbauraum von Gleitringdichtungen verursachen einen teilweisen oder gar vollständigen Trockenlauf der Gleitflächen, mit allen dem Fachmann bekannten potentiellen Nachteilen und Schäden. Im Dichtspalt der Gleitringdichtung soll bzw. muss sich ein stabiler Schmierfilm bilden können.

Dies ist insbesondere bei mit Heißwasser arbeitenden Anlagen zu beachten. Bei Einsatz von Thermalölen muss zusätzlich noch die Oxidationstemperatur in Verbindung mit Sauerstoff beachtet werden. Die im allgemeinen Sprachgebrauch sogenannte "Ölkohleablagerung", welche diese mechanischen Schäden hervorruft und in der Regel zum Totalausfall der Gleitringdichtung führt, muss unbedingt verhindert werden.

Besondere Beachtung ist in diesem Zusammenhang der Wälzlagerung zu schenken. Einerseits erzeugt das Wälzlager im laufenden Betrieb Wärme, die abgeführt werden muss, andererseits ist im Hinblick auf die Lebensdauer die thermische Belastung so gering wie möglich zu halten. In Gleitringdichtungen entstehen bauartbedingt Reibungsverluste, die zu einem Anstieg der Temperatur führen. Die überschüssige Wärme muss abgeleitet werden.

Neben dem schon beschriebenen Austreten von Leichtsiedern aus den Thermalölen können im laufenden Betrieb von Wärmeträgerölanlagen auch durch Eintragung aus dem bestehenden Rohrleitungssystem oder durch chemische Prozesse Gase entstehen.

Besonders bei der Erstinbetriebnahme von Thermalölanlagen und nach Erneuerung von verbrauchten Wärmeträgerölen kommt es durch in der Anlage noch vorhandene Spülwasserreste zu vermehrten Gasausscheidungen. Mit steigender Systemtemperatur gasen Anteile aus dem Wärmeträger aus und können bei zu schneller Erwärmung, in Verbindung mit einer ungenügenden Entgasung der Gesamtanlage, zum kompletten Förderstromabriss in der Pumpe führen. Deswegen sollte die Inbetriebnahme in mehreren kleineren Schritten mit ausreichender Entgasungszeit durchgeführt werden. Das Gleiche spielt sich auch im Inneren der Pumpe ab. Ein ständiges Überwachen, ggf. Nachentlüften, besonders des Dichtungsraumes, ist demnach unerlässlich, ganz besonders deshalb, weil die Menge der Gasansammlung im Dichtungsraum von außen nicht erkennbar und daher der Zeitpunkt einer notwendigen Entlüftung nicht vorhersehbar ist. Eine permanente Entlüftung des Raumes um die Gleitringdichtungen ist nur beschränkt möglich. Das ist mit ein Grund dafür, dass viele Gleitringdichtungen gerade während der Inbetriebnahme eine verkürzte Standzeit aufweisen.

Ein weiterer Nachteil bei aus dem Stand der Technik bekannten Vorrichtungen ist ein möglicherweise zusätzlicher Verrohrungsaufwand zum Auffangen und Entsorgen von austretenden Medien.

Es ist aus dem Stand der Technik bekannt, in Pumpen zu diesem Zweck einen eigenen Sammelraum anzuordnen, in welchem während des Betriebs aus dem Wärmeträgeröl austretendes Gas gesammelt wird. Aus dem Sammelraum ist dann eine Entsorgung möglich. Hierzu wird während des Betriebs kontinuierlich ein Teil des Wärmeträgeröl- / -gasstromgemisches aus dem Bereich der Lager- bzw. Gleitringdichtung abgeleitet, entgast und wieder zurückgeleitet. Die hohen Strömungsgeschwindigkeiten helfen dabei, einen Entgasungskreislauf aufzubauen. Nachteil ist jedoch eine Erwärmung dieses Bereiches und der dort befindlichen Bauteile (Gleitringdichtung mit Nebendichtungen und Kugellager) durch nachfließenden Wärmeträger aus dem Heißkreislauf. Eine thermische Überlastung ist unvermeidlich.

Der Erfindung liegt die Aufgabe zugrunde, ein Kühl- und Entgasungssystem für eine Wärmeträgerpumpe vorzuschlagen, bei welchem die aus dem Stand der Technik bekannten Nachteile vermieden oder zumindest stark verringert werden.

Die Aufgabe wird gelöst mit einem Kühl- und Entgasungssystem für eine Wärmeträgerpumpe gemäß Anspruch 1.

Mit der erfindungsgemäßen Ausbildung des Kühl- und Entgasungssystem können nahezu alle bekannten Nachteile entsprechender bekannter Systeme vermieden werden. So ist hier keine externe Befüllung und Entlüftung erforderlich. Bisher erforderliche Eingriffe von Außen zur Befüllung, Entlüftung und/oder Überwachung entfallen vorteilhafterweise und ermöglichen eine kostengünstigere Konstruktion.

In einer vorteilhaften Ausbildung der Erfindung ist das System gekennzeichnet durch einen Kanal zur Ableitung des Gases in den Förderstrom der Pumpe. Diese Variante vereinfacht die gesamte Konstruktion der Wärmeträgerpumpe, da sozusagen ein Kurzschluss der Förderung des abgetrennten Gases innerhalb der Pumpe in den "normalen" Förderstrom der Pumpe weitere Ableitungseinrichtungen überflüssig macht.

In einer weiteren vorteilhaften Ausbildung der Erfindung ist das System dadurch gekennzeichnet, dass die Zentrifuge in Form einer länglichen auf die Welle der Pumpe aufgesteckte Hülse ausgebildet ist, welche mit einer äußeren Drallnut versehen ist. Diese Ausführungsform ermöglicht eine sehr kompakte und raumsparende Konstruktion, wodurch die Betriebssicherheit erhöht wird und sich Kostenvorteile ergeben.

In noch einer weiteren vorteilhaften Ausbildung der Erfindung ist das System dadurch gekennzeichnet, dass die Lager der Pumpe Gleitlager und deren Dichtungen Gleitringdichtungen sind. Insbesondere beim Einsatz von Gleitlagern bei Wärmeträgerpumpen machen sich die Vorteile des erfindungsgemäßen Systems bemerkbar, da eine Abtrennung von Gasen innerhalb von Kühl- und Schmierkreisläufen besonders bei diesem Lagertyp äußerst gefährlich sind und die Betriebssicherheit herabsetzen.

Zum leichteren Verständnis der Erfindung und zu zeigen, wie diese ausgeführt werden kann, wird sie im Folgenden anhand eines Ausführungsbeispiels unter Zuhilfenahme einer Zeichnung kurz erläutert.
- Fig. 1: zeigt stark schematisiert wesentliche Teile einer Kreiselpumpe mit einem erfindungsgemäßen System in Schnittansicht im Aufriss.
- Fig. 2: zeigt stark schematisiert die Kreiselpumpe nach Fig. 1 in Perspektive mit teilweise entfernten Gehäusepartien zur Darstellung innerer Bauteile.
- Fig. 3: zeigt stark schematisiert die Kreiselpumpe nach Fig. 1 und 2, diesmal von oben, mit Phantomlinien zur Markierung innerer Bauteile.

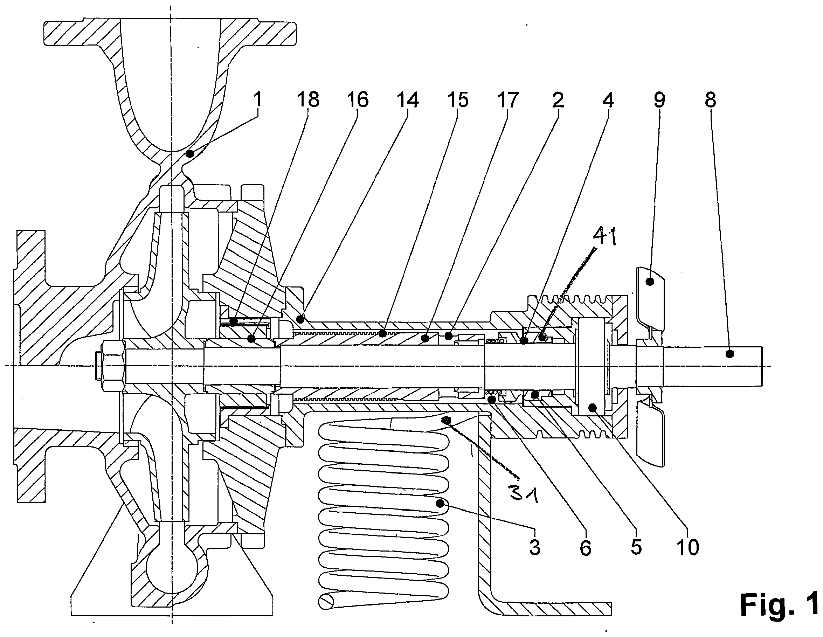

Eine in Fig. 1 dargestellte Kreiselpumpe 1 wird in der Regel vorder Inbetriebnahme über eine Saug- und/oder Druckleitung der Anlage mit Fördermedien befüllt. Eine externe Befüllung oder Entlüftung ist nicht notwendig. Durch den Start einer (nicht gezeigten) an der Pumpenwelle 8 angeordneten Antriebsmaschine wird eine als Fördernuten 2 einer Wellenhülse 17 ausgebildete Turbine in Rotation versetzt. Die Fördernuten 2 erzeugen durch einen Druckaufbau einen permanenten Zirkulationsstrom und fördern einen Wärmeträger im integrierten Kühlkreislauf des Systems über einen Dichtungsraum 6 der Pumpe und einen angeschlossenen Kühler 3, dessen Kühlwindungen in Fig. 1 zum Teil gezeigt sind.

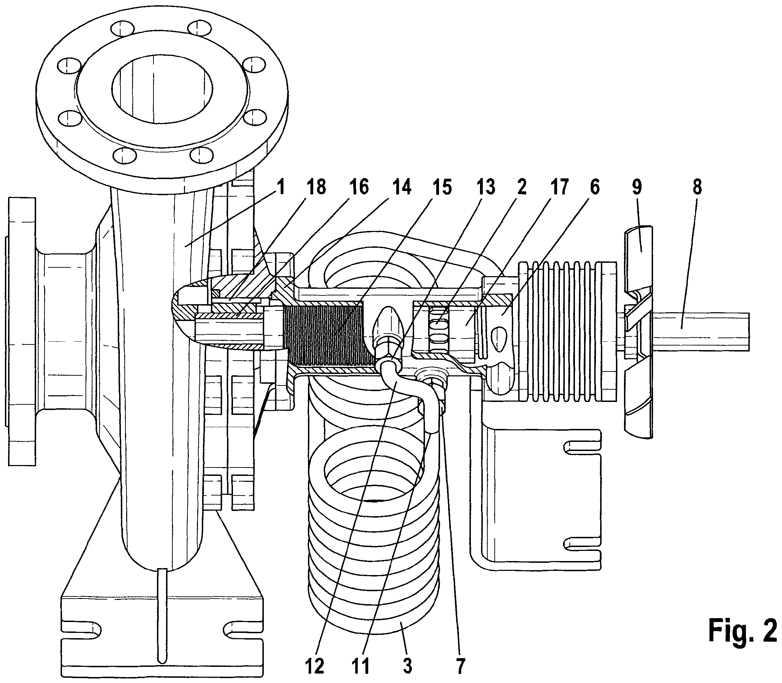

Die Kühlwindung 31 wird wie in Fig. 1 gezeigt ist in Richtung zu einem Dichtungsraum 6 gekrümmt. Der darin fließende Zirkulationsstrom tritt im Bereich von Gleitflächen 4 einer Gleitringdichtung 5 aus dem Kühler 3 aus und verteilt sich im Dichtungsraum 6. Hier kann der Zirkulationsstrom die Reibungswärme der Gleitringdichtung 5 aufnehmen und diese bis zum Wiedereintritt (Fig. 2), Bezugszeichen 7, in den Kühler 3 führen. Der Kühler 3 gibt die Reibungswärme an die Atmosphäre ab. Ein auf der Antriebsseite der Welle 8 sitzender Axiallüfter 9 sorgt für die notwendige Belüftung und Abkühlung des Kühlers 3 und der angrenzenden Gehäuseteile. Damit wird ein zusätzlicher Wärmestau auch im Bereich eines dem Gegenring 41 nebengeordneten Kugellagers 10 verhindert.

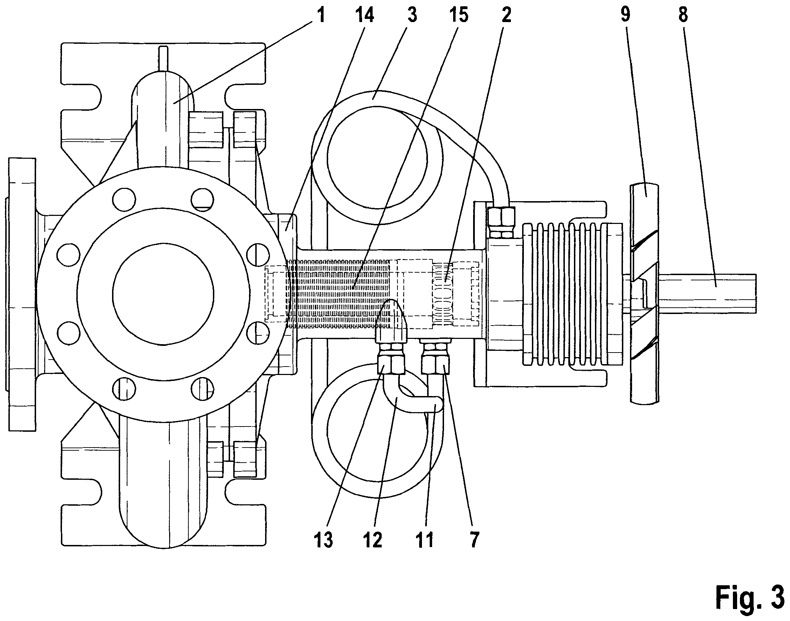

Da, wie oben bereits beschrieben, gasförmige Leichtsieder oder Wasserdampf diesen Zirkulationsstrom unterbrechen und schädlichen Trockenlauf an den Gleitflächen 4 der Gleitringdichtung 5 des Gegenrings 41 erzeugen können, ist unmittelbar nach dem Wiedereintritt 7 in den Kühler 3 ein Gasabscheider 11 angeordnet. Dieser Gasabscheider 11 dient dazu, die beiden Phasen durch den Dichteunterschied zwischen Gas und Flüssigkeit zu trennen. Das leichtere Gas steigt im Gasabscheider 11 auf und wird über eine steigende Leitung 12 zu einer Einspeisestelle 13 im Lagerträger 14 geführt (Fig. 3). Die schwere Flüssigkeit wird in den Kühler 3 geleitet und über den verbleibenden Druck über den Kühler 3 wieder zur Gleitringdichtung 5 geführt. Im Bereich der Einspeisestelle 13 für das Gas bzw. das Gas-/Flüssigkeitsgemisch in den Lagerträger 14, beginnt eine auf der Wellenhülse 17 eingearbeitete sich über deren Länge Richtung Spiralgehäuse der Pumpe 1 erstreckende Drallnut 15 (Fig. 3). Hier erfolgt nun die eigentliche Trennung von Gas und Flüssigkeit. Aufgrund der Umfangsgeschwindigkeit der gleichsam als Zentrifuge arbeitende Wellenhülse 17 wird die (schwerere) Flüssigkeit nach außen verdrängt und das (leichtere) Gas zur Wellenachse gezogen. Die Drallnut 15 ist schraubenförmig mit einer Steigung in Richtung Gleitlager 16 ausgebildet und kann das Gas in dieser Richtung abtransportieren und ableiten.

Kurz vor dem Gleitlager 16 öffnet sich bei dem hier gezeigten Ausführungsbeispiel der enge Spalt zwischen Lagerträger 14 und Wellenhülse 17, weswegen die Rotationsgeschwindigkeit und die Zentrifugalkraft schlagartig abfallen und das Gas in der Flüssigkeit wieder aufsteigen kann. Das Gas kann über eine hier an der höchsten Stelle im Gleitlager 16 angebrachten Bohrung 18 entweichen. Über das Spiralgehäuse der Pumpe 1 wird dieser Gasanteil mit dem normalen Förderstrom der Pumpe 1 abgeleitet.

### Bezugszeichen

- 1: Pumpe
- 2: Fördernuten / Turbine
- 3: Kühler
- 31: Kühlwindung
- 4: Gleitflächen
- 41: Gegenring der Gleitringdichtung
- 5: Gleitringdichtung
- 6: Dichtungsraum
- 7: Austritt / Wiedereintritt in den Kühler
- 8: Antriebsseite der Welle
- 9: Axiallüfter
- 10: Kugellager
- 11: Gasabscheider
- 12: Leitung
- 13: Einspeisestelle
- 14: Lagerträger
- 15: Drallnut
- 16: Gleitlager
- 17: Wellenhülse
- 18: Bohrung

## Patentansprüche

1. Kühl- und Entgasungssystem für eine Wärmeträgerpumpe (1), mit folgenden Merkmalen:
a) einem Kühler (3),
b) einer dem Kühler (3) stromaufwärts vorgeordneten Turbine (2) zur Erzeugung eines Zirkulationsstroms und Förderung eines Wärmeträgers durch einen dem Kühler (3) nachgeordneten Dichtungsraum (6) der Pumpe und den Kühler (3),
c) einem dem Kühler (3) zugeordneten Gasabscheider (11),
d) einer Einspeisestelle (13) zur Ableitung des durch den Gasabscheider getrennten Gases,
**dadurch gekennzeichnet, dass**
das Kühl- und Entgasungssystem eine der Einspeisestelle (13) stromabwärts nachgeordnete Zentrifuge und Fördereinrichtung (15) zur Trennung von Gas und Wärmeträgerflüssigkeit und zur Ableitung des Gases aus der Pumpe (1) aufweist.

2. Kühl- und Entgasungssystem nach Anspruch 1, **gekennzeichnet durch** einen Kanal (18) zur Ableitung des Gases in den Förderstrom der Pumpe (1).

3. Kühl- und Entgasungssystem nach Anspruch 1 oder 2, **dadurch gekennzeichnet, dass** die Zentrifuge in Form einer länglichen auf die Welle der Pumpe (1) aufgesteckte Wellenhülse (17) ausgebildet ist, welche mit einer äußeren Drallnut (15) versehen ist.

4. Kühl- und Entgasungssystem nach Anspruch 1, 2 oder 3, **dadurch gekennzeichnet, dass** die Lager der Pumpe (1) Gleitlager (16) und deren Dichtungen Gleitringdichtungen (5) sind.

## Claims

1. Cooling and degassing system for a heat carrier pump (1), having the following features:
a) a cooler (3),
b) a turbine (2) arranged upstream of the cooler (3) for generating a circulation flow and conveying a heat carrier through a seal chamber (6) of the pump arranged downstream of the cooler (3) and through the cooler (3),
c) a gas separator (11) associated with the cooler (3),
d) a feed point (13) for discharging the gas separated by the gas separator, **characterised in that**
the cooling and degassing system comprises a centrifuge and conveying device (15) arranged downstream of the feed point (13) for separating gas and heat carrier fluid and for discharging the gas from the pump (1).

2. Cooling and degassing system according to claim 1, **characterised by** a channel (18) for discharging the gas into the volumetric flow of the pump (1).

3. Cooling and degassing system according to claim 1 or 2, **characterised in that** the centrifuge is designed in the form of an elongated shaft sleeve (17) fitted onto the shaft of the pump (1), said shaft sleeve being provided with an external spiral groove (15).

4. Cooling and degassing system according to claim 1, 2 or 3, **characterised in that** the bearings of the pump (1) are plain bearings (16) and their seals are mechanical seals (5).

## Revendications

1. Système de refroidissement et de dégazage pour une pompe de transfert de chaleur (1), avec les caractéristiques suivantes :
a) un refroidisseur (3).
b) une turbine (2) disposée en amont du refroidisseur (3) afin de générer un flux de circulation et de transporter un caloporteur à travers une zone d'étanchéité (6) disposée en aval du refroidisseur (3) de la pompe et le refroidisseur (3),
c) un séparateur de gaz (11) assigné au refroidisseur (3),
d) un point d'injection (13) pour évacuer le gaz séparé par le séparateur de gaz,
**caractérisé en ce que**
le système de refroidissement et de dégazage présente une centrifugeuse et un convoyeur (15) pour séparer le gaz et le fluide caloporteur et pour évacuer le gaz hors de la pompe (1) intercalée en aval du point d'injection (13).

2. Système de refroidissement et de dégazage selon la revendication 1, **caractérisé par** un canal (18) pour évacuer le gaz dans le flux de circulation de la pompe (1).

3. Système de refroidissement et de dégazage selon la revendication 1 ou 2, **caractérisé en ce que** la centrifugeuse est conçue comme un manchon d'arbre (17) oblongue fiché sur l'arbre de la pompe (1), ledit manchon d'arbre (17) étant doté d'une rainure hélicoïdale extérieure (15).

4. Système de refroidissement et de dégazage selon la revendication 1, 2 ou 3, **caractérisé en ce que** les paliers de la pompe (1) sont des paliers coulissants (16) et **en ce que** leurs joints sont des joints à anneau coulissante (5).
